# EUROPÄISCHE PATENTSCHRIFT

(11) **EP 4 416 404 B1**
(45) Veröffentlichungstag und Bekanntmachung des Hinweises auf die Patenterteilung: **01.04.2026**
(21) Anmeldenummer: 22856982.8
(22) Anmeldetag: 11.10.2022
(51) Int. Cl.: F16D 7/00, F16D 7/10

(54) **SICHERHEITSKUPPLUNG**
SAFETY COUPLING
ACCOUPLEMENT DE SÉCURITÉ

(30) Priorität: 11.10.2021 EP 21401041; 14.07.2022 EP 22185066
(43) Veröffentlichungstag der Anmeldung: 21.08.2024
(73) Patentinhaber: R+W Antriebselemente GmbH, 63939 Wörth a. Main (DE)
(72) Erfinder: DUGGEN, Jörg, 63939 Woerth a. Main (DE)
(74) Vertreter: Hofmann, Andreas
(86) Internationale Anmeldenummer: PCT/DE2022/150005
(87) Internationale Veröffentlichungsnummer: WO 2023/066431

(56) Entgegenhaltungen:
- DE-A1- 102020 126 988
- US-A1- 2014 309 040

## Beschreibung

### Technisches Gebiet

Die vorliegende Erfindung betrifft eine gattungsgemäße Sicherheitskupplung, insbesondere eine Sicherheitskupplung, die bei Überschreiten eines einstellbaren Überlastdrehmoments bei Überlast aus einer Antriebslage in einen Freilauf auskuppelt,
- mit einem um eine Drehachse drehbaren treibenden Flansch, der am Umfang eines Lochkreises, insbesondere gleichmäßig, verteilte Ausnehmungen, insbesondere Einrastsegmente oder Kalotten, aufweist, und
- mit einem um dieselbe Drehachse drehbaren angetriebenen Kupplungsteil,

wobei das Kupplungsteil in der Antriebslage Rastelemente, insbesondere Rastkugeln, unter Federkraft in die Ausnehmungen hineindrückende, eine drehfeste Verbindung zwischen dem Flansch und dem Kupplungsteil bewirkende und bei Überschreiten des Überlastdrehmoments die Freigabe der drehfesten Verbindung unter Auskuppeln in den Freilauf bewirkende Schaltsegmente, insbesondere Halteeinrichtungen oder Rasteinrichtungen, aufweist, wobei jedem Rastelement ein Schaltsegment zugeordnet ist und sich das Rastelement von der Antriebslage entgegen der Federkraft aus der Ausnehmung in den Freilauf herausbewegt,
wobei der Flansch als ein einem Lager oder einer Lagerung zugeordneter innerer Ring ausgebildet ist und wobei das Kupplungsteil als ein dem inneren Ring, insbesondere konzentrisch, zugeordneter äußerer Ring ausgebildet ist (vgl. US 2014/0309040 A1).

### Stand der Technik

Sicherheitskupplungen dieser Art sind in einer Vielzahl von Ausführungsformen bekannt (DE 197 39 469 A1; DE 101 43 583 A1; DE 10 2006 050 995 A1; WO 2012/007129 A1) und haben sich bewährt.

Eine solche bekannte Sicherheitskupplung weist in der Antriebslage keine relative Drehbewegung zwischen Flansch und Kupplungsteil auf. Bei Überlast, also bei Überschreiten eines einstellbaren Überlastdrehmoments kuppelt die Sicherheitskupplung von der Antriebslage in den Freilauf aus, in welchem sie eine relative Drehbewegung in einer Drehrichtung zum Flansch aufweist und in welchem sie bis zur Rückstellung verbleibt. Hierbei wird das angetriebene Teil wegen der kraftschlüssigen Verbindung zur angeschlossenen Last stehen bleiben und sich nicht mehr weiterdrehen, wohingegen das treibende Teil sich weiterdreht, weshalb sich die Relativbewegung in der genannten einen Drehrichtung einstellt.

Zum Stand der Technik sei des Weiteren auf die Druckschriften DE 35 09 213 A1, DE 10 2020 126 988 A1, DE 20 2019 003 203 U1, EP 0 156 993 A1, US 9,086,096 B2, WO 2012/101504 A1 und WO 2020/211999 A1 aufmerksam gemacht.

In manchen Applikationen ist eine radiale Anordnung der Schaltsegmente sinnvoll oder notwendig, zum Beispiel dann, wenn im Antriebsstrang mehr Platz im Durchmesser als in der Länge zur Verfügung steht. Weiterhin gibt es Flanschanbindungen an Antriebs- und Abtriebsseite. Dabei wird die radiale Anordnung der Schaltsegmente mit konventionellen Lagern eingesetzt. Je größer die Kupplung ist, desto weiter sind die Schaltsegmente von der konventionellen Lagerung entfernt, wobei jedoch die Haltestruktur für die Schaltsegmente mit der Haltestruktur der Lager verbunden sein muss. Bei kleineren Kupplungen ist dies unproblematisch; jedoch wird diese Art der Konstruktion problematischer, je größer die Kupplungen werden:
- Ab einer bestimmten Größe treten fertigungstechnische Limitierungen der Verbindungsstrukturen zwischen den Schaltsegmenten und dem konventionellen Lager auf; derartige Limitierungen können nur durch aufwändige und nicht immer zufriedenstellende Sonderkonstruktionen gelöst werden.
- Der bisherige Stand der Technik benötigt eine Vielzahl von Einzelteilen, die über Zentrierungen miteinander verbunden werden; dies führt zu erhöhter Unwucht.
- Die Kupplung wird sehr schwer, denn die Verbindungsstruktur zwischen den Schaltsegmenten und dem konventionellen Lager kann ab einer bestimmten Größe mehrere Tonnen betragen und bringt so zusätzliche Lasten in das Gesamtsystem ein. Dadurch muss das Gesamtsystem größer ausgelegt werden, ohne einen direkten Mehrwert zu bieten.
- Das aus dem erhöhten Gewicht resultierende erhöhte Massenträgheitsmoment muss bei jedem Anfahren auf Betriebsdrehzahl beschleunigt oder zum Stillstand abgebremst werden. Die hierfür benötigte Leistungsaufnahme oder -abgabe bringt keinen Mehrwert für die Applikation und führt zu unnötigen Kosten.

### Darstellung der vorliegenden Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine gattungsgemäße Sicherheitskupplung so weiterzubilden, dass
- die Verbindungsstruktur zwischen Schaltsegment und konventionellem Lager auf ein Minimum reduziert ist, damit eine wirtschaftliche Fertigung gewährleistet werden kann;
- Zentrierungen auf ein Minimum reduziert sind;
- das Volumen der Verbindungsstruktur auf ein Minimum reduziert ist, um die Belastung auf das Gesamtsystem so klein wie möglich zu halten;
- der Kupplungsquerschnitt reduziert ist, damit die Massenträgheit der Kupplung eine geringere Leistungsaufnahme oder -abgabe mit sich bringt.

Erfindungsgemäß wird diese Aufgabe durch eine Sicherheitskupplung mit den Merkmalen des Anspruchs 1 gelöst. Vorteilhafte Ausgestaltungen und zweckmäßige Weiterbildungen der vorliegenden Erfindung sind in den jeweiligen abhängigen Ansprüchen gekennzeichnet.

Durch eine gemäß der vorliegenden Erfindung ausgebildete Sicherheitskupplung kann auf eine Lagerung mit einem Wälzlager als eigenständiges Bauteil verzichtet werden. Anstelle dessen wird die Kupplung als Lager oder Lagerung ausgeführt, und die Schaltsegmente werden im dem Lager oder der Lagerung zugeordneten inneren Ring oder Innenring und im dem inneren Ring oder Innenring, insbesondere konzentrisch, zugeordneten äußerer Ring oder Außenring integriert.

Durch die vorliegende Erfindung wird also eine Sicherheitskupplung mit integrierter Lagerung zur Verfügung gestellt, wobei
- der Flansch als ein einem Lager oder einer Lagerung zugeordneter innerer Ring ausgebildet ist,
- das Kupplungsteil als ein dem inneren Ring, insbesondere konzentrisch, zugeordneter äußerer Ring ausgebildet ist und
- zwischen dem inneren Ring und dem äußeren Ring, insbesondere zwischen der äußeren Mantelfläche des inneren Rings und der inneren Mantelfläche des äußeren Rings, Wälzkörper angeordnet sind.

Dies hat den Vorteil, dass es keine schwere Verbindungsstruktur zwischen den Schaltsegmenten und dem Lager / der Lagerung gibt. Anstelle dessen dienen der innere Ring / Innenring und der äußere Ring / Außenring selbst als allein schon aufgrund der dazwischen angeordneten Wälzkörper (zum Beispiel Kugeln, Zylinder und/oder Kegel) notwendige Verbindungsstruktur.

Gemäß einer bevorzugten Ausführungsform der vorliegenden Erfindung kann der Lochkreis auf einer ebenen Stirnseite oder einem Mantel des Flansches angeordnet sein.

In einer vorteilhaften Ausgestaltungsform der vorliegenden Erfindung kann das Schaltsegment als federbelastete Rastkugel und/oder als am Umfang verteilt angeordnete Stößel ausgebildet sein, die formschlüssig in die auf dem Flansch angeordnete Ausnehmung mittels der Federkraft eindrückbar sein kann.

Gemäß einer zweckmäßigen Weiterbildung der vorliegenden Erfindung kann die Federkraft durch mindestens eine Tellerfeder bereitstellbar sein.

In einer bevorzugten Ausgestaltungsform der vorliegenden Erfindung kann das Schaltsegment in einem Gehäuse aufgenommen sein.

Gemäß einer vorteilhaften Weiterbildung der vorliegenden Erfindung kann das Schaltsegment im Wesentlichen senkrecht zur Drehachse, insbesondere radial nach außen weisend, angeordnet sein.

In einer zweckmäßigen Ausführungsform der vorliegenden Erfindung können die Wälzkörper als Kugeln, Zylinder und/oder Kegel ausgebildet sein.

Gemäß der vorliegenden Erfindung weisen/weist der innere Ring und/oder der äußere Ring mindestens eine, insbesondere sich im Wesentlichen senkrecht zur Drehachse erstreckende, Bohrung oder Öffnung auf, durch die der Wälzkörper zwischen den inneren Ring und den äußeren Ring, insbesondere zwischen die äußere Mantelfläche des inneren Rings und die innere Mantelfläche des äußeren Rings, eingebracht werden kann, wobei insbesondere für Großwälzlager (auch slewing bearing genannt) das Befüllen der Wälzlager-Bahnen mit Wälzkörpern durch die Bohrung oder Öffnung am inneren Ring / Innenring und/oder am äußeren Ring / Außenring realisiert werden kann.

In einer vorteilhaften Ausgestaltungsform der vorliegenden Erfindung kann, insbesondere nach Einbringen der Wälzkörper, die Bohrung oder Öffnung mittels mindestens eines Verschlussmittels, insbesondere mittels mindestens eines Pfropfens oder mittels mindestens eines Stopfens, verschließbar sein:
Nachdem die Wälzkörper eingebracht sind, kann der innere Ring / Innenring und/oder der äußere Ring / Außenring mittels dieses mindestens einen Verschlussmittels, insbesondere mittels dieses mindestens einen Pfropfens oder mittels dieses mindestens einen Stopfens, verschlossen werden.

Mithin ist in Kombination mit den Schaltmodulen als Sicherheitskupplung ein Lagerdeckel, der sehr viele Schrauben zur Befestigung benötigt, vorteilhafterweise nicht notwendig.

Ein weiterer Vorteil ist in einer höheren Federsteifigkeit des inneren Rings / Innenrings zu sehen, denn es erfolgt keine Schwächung durch Schrauben (, zum Beispiel durch Schrauben M42 x 50, die für einen Lagerdeckel einer Sicherheitskupplung für 42*106 Nm nicht unrealistisch sind). Derartige Schrauben wären aber durch die oben dargelegte Befüll-Methode gemäß der vorliegenden Erfindung überflüssig, was zu einer Zeitersparnis bei der Montage führt und die Kosten reduziert, denn es sind keine Maschinenelemente für einen Lagerdeckel erforderlich.

Die vorliegende Erfindung betrifft schließlich die Verwendung mindestens einer Sicherheitskupplung der vorstehend dargelegten Art bei einer Windkraftanlage, insbesondere bei einem Windrad, zum Beispiel in deren/dessen mechanischem Antrieb, wie etwa beim mechanischen Wiedereinrasten.

Eine beispielhafte Anwendung ist die sogenannte Gondelprüfung (auch Nacelle Testing, zum Beispiel Dynamic Nacelle Testing, genannt) von großen Windkraftanlagen, insbesondere Windrädern, auf einem Prüfstand für Highly Accelerated Lifetime Tests (= HALT: es handelt sich hierbei um eine stark beschleunigte Grenzlastprüfung, also um ein qualitatives Testverfahren mit dem Ziel, vorzugsweise elektronische und elektromechanische Baugruppen noch im Entwicklungsstadium einer beschleunigten Alterung auszusetzen, um Schwachstellen und Designfehler aufdecken zu können).

Da Windkraftanlagen immer größer werden und konventionelle Lösungen von Sicherheitskupplungen an ihre Grenzen stoßen, kann hier die volle Integration der Schaltmodule in Großwälzlagern erfindungsgemäß Abhilfe schaffen.

### Kurze Beschreibung der Zeichnungen

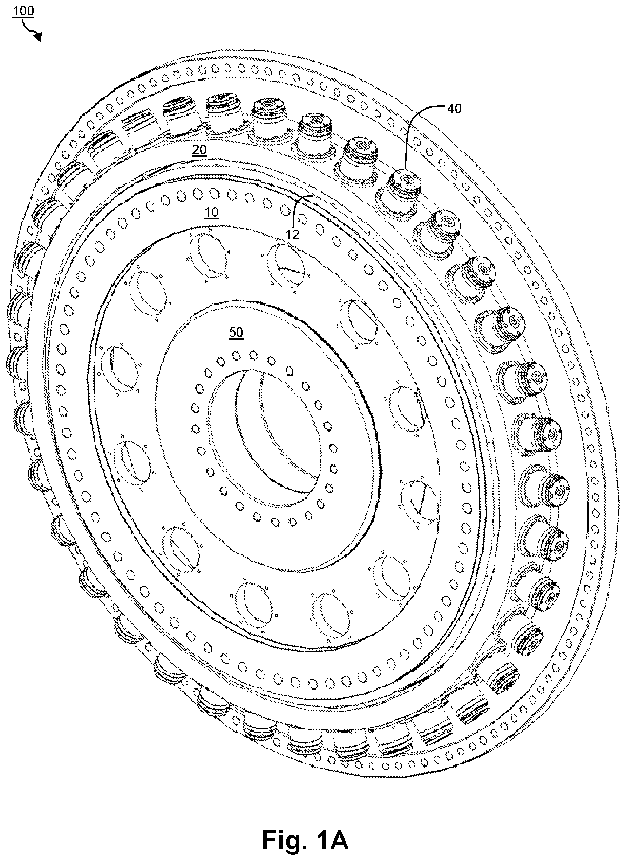

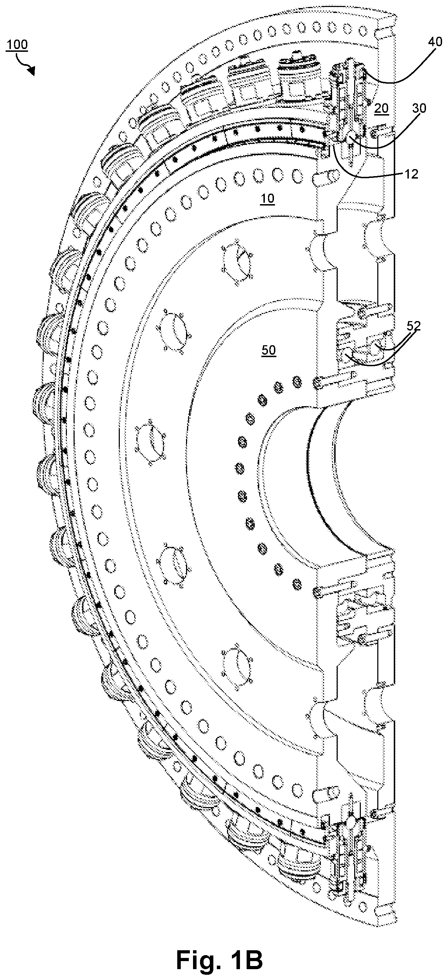

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die dem Anspruch 1 nachgeordneten Ansprüche verwiesen, andererseits werden weitere Ausgestaltungen, Merkmale und Vorteile der vorliegenden Erfindung nachstehend unter anderem anhand der durch Fig. 1 bis Fig. 4 veranschaulichten Ausführungsbeispiele näher erläutert.

Es zeigt:
- Fig. 1A: eine Perspektivansicht eines ersten Ausführungsbeispiels einer Sicherheitskupplung gemäß der vorliegenden Erfindung;
- Fig. 1B: eine perspektivische Schnittansicht des Ausführungsbeispiels aus Fig. 1A;
- Fig. 2: eine perspektivische Schnittansicht eines zweiten Ausführungsbeispiels einer Sicherheitskupplung gemäß der vorliegenden Erfindung; und
- Fig. 3: eine perspektivische Teilansicht eines dritten Ausführungsbeispiels einer Sicherheitskupplung gemäß der vorliegenden Erfindung.

Gleiche, ähnliche oder übereinstimmende Ausgestaltungen, Elemente oder Merkmale sind in Fig. 1A bis Fig. 3 mit denselben Bezugszeichen versehen; es wird auf eine wiederholte Beschreibung dieser Ausgestaltungen, Elemente oder Merkmale verzichtet. Die Darstellungen in Fig. 1A bis Fig. 3 sind nicht notwendigerweise maßstabsgetreu; etwaige Bemessungs- und Dimensionierungsangaben in Fig. 1A bis Fig. 3 sind rein beispielhaft.

### Bevorzugte Ausführungsform der Erfindung;

### bester Weg zur Ausführung der vorliegenden Erfindung

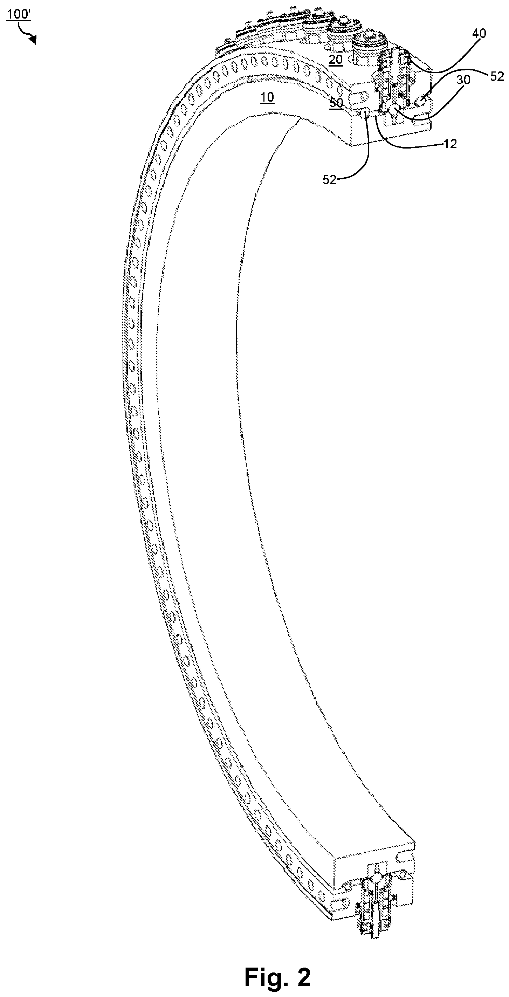

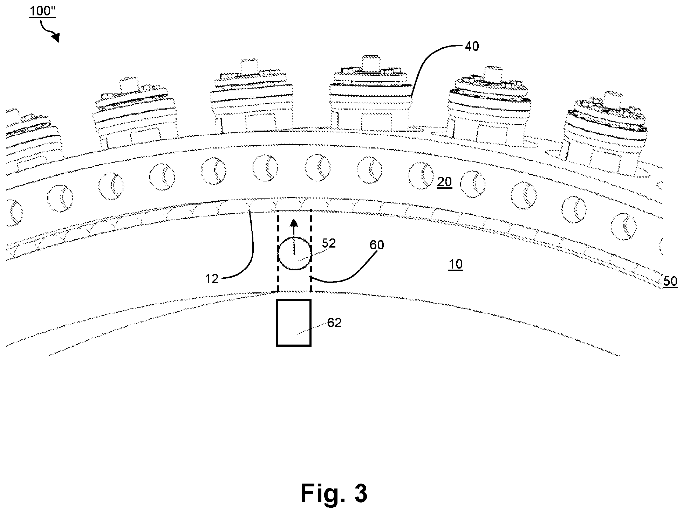

In Fig. 1A bis Fig. 3 ist jeweils ein Ausführungsbeispiel einer Sicherheitskupplung 100 (= erstes Ausführungsbeispiel gemäß Fig. 1A, Fig. 1B) bzw. 100' (= zweites Ausführungsbeispiel gemäß Fig. 2) bzw. 100" (= drittes Ausführungsbeispiel gemäß Fig. 3) dargestellt, die bei Überschreiten eines einstellbaren Überlastdrehmoments bei Überlast aus einer Antriebslage in einen Freilauf auskuppelt.

Ein um eine Drehachse drehbarer treibender Flansch 10 weist am Umfang 12 eines Lochkreises gleichmäßig verteilte Ausnehmungen, insbesondere Einrastsegmente oder Kalotten, auf. Ein um dieselbe Drehachse drehbares angetriebenes Kupplungsteil 20 weist in der Antriebslage Rastkugeln 30 unter durch Tellerfedern bereitgestellter Federkraft in die Ausnehmungen hineindrückende, eine drehfeste Verbindung zwischen dem Flansch 10 und dem Kupplungsteil 20 bewirkende und bei Überschreiten des Überlastdrehmoments die Freigabe der drehfesten Verbindung unter Auskuppeln in den Freilauf bewirkende Schaltsegmente 40 in Form von Halteeinrichtungen oder Rasteinrichtungen auf, wobei jeder Rastkugel 30 ein Schaltsegment 40 zugeordnet ist und sich die Rastkugel 30 von der Antriebslage entgegen der Federkraft aus der Ausnehmung in den Freilauf herausbewegt.

Der Lochkreis ist auf der ebenen Stirnseite oder dem Mantel des Flansches 10 vorgesehen. Die Schaltsegmente 40 können entweder als einfache federbelastete Rastelemente oder auch als mehrere am Umfang verteilt angeordnete Stößel ausgebildet sein, gegebenenfalls mit einer vorderen Rastkugel 30 als sogenannte Schaltsegmente, die formschlüssig in die auf dem Flansch 10 vorgesehene Ausnehmung mittels der Kraft der Feder eingedrückt sind.

Bei Überlast bewegen sich die Rastkugeln 30 in Umfangsrichtung und zugleich in axialer Richtung entgegen der Kraft der Feder aus der Ausnehmung und bewirken als Halteeinrichtung ein andauerndes Auskuppeln bis zum manuellen Wieder-Einkuppeln der Sicherheitskupplung 100, 100', 100" durch deren Rückstellelement, weil sie reibungs- und/oder formschlüssig in dieser Stellung von Sperrsegmenten gehalten verbleiben, wobei im Freilauf der Stößel an seinem freien Ende über das Gehäuse hinausragt.

Der längs dieses Gehäuses des Schaltsegments 40 geführte Stößel weist eine die Federkraft erzeugende Feder auf und zeichnet sich dadurch aus, dass er einen zwei Zylinderräume voneinander trennende hydraulische Kolben von seiner der Antriebslage entsprechenden Ruhelage in eine dem Freilauf entsprechende Haltelage unter Verdrängung von Hydraulikflüssigkeit von dem einen Zylinderraum über mindestens eine zumindest ein zu diesem hin öffnendes (und zu dem anderen Zylinderraum hin schließendes) Rückschlagventil aufweisende Verbindung in den anderen Zylinderraum bewegt.

Zum Wiedereinkuppeln muss der Stößel wieder in seine Antriebslage gebracht werden. Das geschieht in praxi mit einem Schlag eines Kunststoffhammers als Rückstellelement auf das freie, aus dem Gehäuse herausragende Ende des Stößels zu dessen Lösen. Hierbei ist aber zusätzlich darauf zu achten, dass sich der Stößel bzw. dessen Rastkugeln 40 gegenüber der Ausnehmung befindet, weil nur so der Freilauf beendet und die Antriebslage wieder eingenommen werden kann.

In manchen Applikationen, so in den in Fig. 1A bis Fig. 3 gezeigten, ist eine radial nach außen weisende, das heißt im Wesentlichen senkrecht zur Drehachse orientierte Ausrichtung der Schaltsegmente 40 sinnvoll, gerade wenn im Antriebsstrang mehr Platz in diametraler Richtung als in axialer Richtung zur Verfügung steht. Weiterhin gibt es eine kundenseitige Flanschanbindung an Antriebs- und Abtriebsseite.

Hierzu ist bei radialer Anordnung der Schaltsegmente 40 das (Wälz-)Lager oder die (Wälz-)Lagerung 50 nicht als eigenständiges Bauteil ausgebildet, sondern die Sicherheitskupplung 100 (= erstes Ausführungsbeispiel gemäß Fig. 1A, Fig. 1B) bzw. 100' (= zweites Ausführungsbeispiel gemäß Fig. 2) bzw. 100" (= drittes Ausführungsbeispiel gemäß Fig. 3) ist als Lager ausgeführt, nämlich dergestalt,
- dass der Flansch 10 als ein dem Lager oder der Lagerung 50 zugeordneter innerer Ring / Innenring ausgebildet ist,
- dass das Kupplungsteil 20 als ein dem inneren Ring konzentrisch zugeordneter äußerer Ring / Außenring ausgebildet ist und
- dass zwischen dem inneren Ring und dem äußeren Ring, insbesondere zwischen der äußeren Mantelfläche des inneren Rings und der inneren Mantelfläche des äußeren Rings, Wälzkörper 52, insbesondere Kugeln, Zylinder und/oder Kegel, angeordnet sind.

Hierbei sind die Schaltsegmente 40 im inneren Ring / Innenring und im äußeren Ring / Außenring integriert.

Hierdurch ist eine Sicherheitskupplung 100' (= zweites Ausführungsbeispiel gemäß Fig. 2) bzw. 100" (= drittes Ausführungsbeispiel gemäß Fig. 3) mit integrierter Lagerung zur Verfügung gestellt, was den Vorteil hat, dass es keine schwere Verbindungsstruktur zwischen den Schaltsegmenten 40 und dem Lager / der Lagerung 50 gibt. Anstelle dessen dienen der innere Ring / Innenring und der äußere Ring / Außenring selbst als allein schon wegen der Wälzkörper 52 notwendige Verbindungsstruktur.

Anhand Fig. 3 ist veranschaulicht, dass insbesondere für Großwälzlager (auch slewing bearing genannt) das Befüllen der Wälzlager-Bahnen mit den Wälzkörpern 52 durch eine sich senkrecht zur Drehachse erstreckende Bohrung oder Öffnung 60 am inneren Ring / Innenring (, alternativ oder ergänzend auch am äußeren Ring / Außenring) realisiert wird. Nachdem die Wälzkörper 52 durch die Bohrung oder Öffnung 60 hindurch zwischen die äußere Mantelfläche des inneren Rings und die innere Mantelfläche des äußeren Rings eingebracht sind, wird die Bohrung oder Öffnung 60 des inneren Rings / Innenrings (, alternativ oder ergänzend auch die Bohrung oder Öffnung des äußeren Rings / Außenrings) durch ein Verschlussmittel 62 in Form eines Pfropfens oder Stopfens verschlossen. Mithin ist in Kombination mit den Schaltmodulen 40 als Sicherheitskupplung ein Lagerdeckel, der sehr viele Schrauben zur Befestigung benötigt, nicht notwendig.

Ein weiterer Vorteil ist in einer höheren Federsteifigkeit des inneren Rings / Innenrings zu sehen, denn es erfolgt keine Schwächung durch Schrauben (, zum Beispiel durch Schrauben M42 x 50, die für einen Lagerdeckel einer Sicherheitskupplung für 42*106 Nm nicht unrealistisch sind). Derartige Schrauben sind aber durch die oben dargelegte Befüll-Methode gemäß der vorliegenden Erfindung überflüssig, was zu einer Zeitersparnis bei der Montage führt und die Kosten reduziert, denn es sind keine Maschinenelemente für einen Lagerdeckel notwendig.

Eine beispielhafte Anwendung ist die sogenannte Gondelprüfung (auch Nacelle Testing, zum Beispiel Dynamic Nacelle Testing genannt) von großen Windkraftanlagen, insbesondere Windrädern, auf einem Prüfstand für Highly Accelerated Lifetime Tests (= HALT: es handelt sich hierbei um eine stark beschleunigte Grenzlastprüfung, also um ein qualitatives Testverfahren mit dem Ziel, vorzugsweise elektronische und elektromechanische Baugruppen noch im Entwicklungsstadium einer beschleunigten Alterung auszusetzen, um Schwachstellen und Designfehler aufdecken zu können). Da Windkraftanlagen immer größer werden und konventionelle Lösungen von Sicherheitskupplungen an ihre Grenzen stoßen, kann hier die volle Integration der Schaltmodule 40 in Großwälzlager Abhilfe schaffen.

### Liste der Bezugszeichen

- 100: Sicherheitskupplung (= erstes Ausführungsbeispiel gemäß Fig. 1A, Fig. 1B)
- 100': Sicherheitskupplung (= zweites Ausführungsbeispiel gemäß Fig. 2)
- 100": Sicherheitskupplung (= drittes Ausführungsbeispiel gemäß Fig. 3)
- 10: Flansch
- 12: Umfang des Flansches 10
- 20: Kupplungsteil
- 30: Rastelement, insbesondere Rastkugel
- 40: Schaltmodul oder Schaltsegment, insbesondere Halteeinrichtung oder Rasteinrichtung
- 50: Lager oder Lagerung, insbesondere Wälzlager oder Wälzlagerung
- 52: Wälzkörper, insbesondere Kugel oder Kegel oder Zylinder, des Lagers oder der Lagerung 50
- 60: Bohrung oder Öffnung
- 62: Verschlussmittel, insbesondere Pfropfen oder Stopfen, für Bohrung oder Öffnung 60

## Patentansprüche

1. Sicherheitskupplung (100; 100'; 100"), die bei Überschreiten eines einstellbaren Überlastdrehmoments bei Überlast aus einer Antriebslage in einen Freilauf auskuppelt,
- mit einem um eine Drehachse drehbaren treibenden Flansch (10), der am Umfang (12) eines Lochkreises, insbesondere gleichmäßig, verteilte Ausnehmungen, insbesondere Einrastsegmente oder Kalotten, aufweist, und
- mit einem um dieselbe Drehachse drehbaren angetriebenen Kupplungsteil (20),
wobei das Kupplungsteil (20) in der Antriebslage Rastelemente (30), insbesondere Rastkugeln, unter Federkraft in die Ausnehmungen hineindrückende, eine drehfeste Verbindung zwischen dem Flansch (10) und dem Kupplungsteil (20) bewirkende und bei Überschreiten des Überlastdrehmoments die Freigabe der drehfesten Verbindung unter Auskuppeln in den Freilauf bewirkende Schaltsegmente (40), insbesondere Halteeinrichtungen oder Rasteinrichtungen, aufweist, wobei jedem Rastelement (30) ein Schaltsegment (40) zugeordnet ist und sich das Rastelement (30) von der Antriebslage entgegen der Federkraft aus der Ausnehmung in den Freilauf herausbewegt,
- wobei der Flansch (10) als ein einem Lager oder einer Lagerung (50) zugeordneter innerer Ring ausgebildet ist und
- wobei das Kupplungsteil (20) als ein dem inneren Ring, insbesondere konzentrisch, zugeordneter äußerer Ring ausgebildet ist,
**dadurch gekennzeichnet,**
- **dass** zwischen dem inneren Ring und dem äußeren Ring, insbesondere zwischen der äußeren Mantelfläche des inneren Rings und der inneren Mantelfläche des äußeren Rings, Wälzkörper (52) angeordnet sind und
- **dass** der innere Ring und/oder der äußere Ring mindestens eine Bohrung oder Öffnung (60) aufweisen/aufweist, durch die die Wälzkörper (52) zwischen den inneren Ring und den äußeren Ring eingebracht werden können.

2. Sicherheitskupplung gemäß Anspruch 1, **dadurch gekennzeichnet, dass** der Lochkreis auf einer ebenen Stirnseite oder einem Mantel des Flansches (10) angeordnet ist.

3. Sicherheitskupplung gemäß Anspruch 1 oder 2, **dadurch gekennzeichnet, dass** das Schaltsegment (40) als federbelastete Rastkugel und/oder als am Umfang verteilt angeordnete Stößel ausgebildet ist, die formschlüssig in die auf dem Flansch (10) angeordnete Ausnehmung mittels der Federkraft eindrückbar ist.

4. Sicherheitskupplung gemäß mindestens einem der Ansprüche 1 bis 3, **dadurch gekennzeichnet, dass** die Federkraft durch mindestens eine Tellerfeder bereitstellbar ist.

5. Sicherheitskupplung gemäß mindestens einem der Ansprüche 1 bis 4, **dadurch gekennzeichnet, dass** das Schaltsegment (40) in einem Gehäuse aufgenommen ist.

6. Sicherheitskupplung gemäß mindestens einem der Ansprüche 1 bis 5, **dadurch gekennzeichnet, dass** das Schaltsegment (40) im Wesentlichen senkrecht zur Drehachse, insbesondere radial nach außen weisend, angeordnet ist.

7. Sicherheitskupplung gemäß mindestens einem der Ansprüche 1 bis 6, **dadurch gekennzeichnet, dass** die Wälzkörper (52) als Kugeln, Zylinder und/oder Kegel ausgebildet sind.

8. Sicherheitskupplung gemäß mindestens einem der Ansprüche 1 bis 7, **dadurch gekennzeichnet, dass** sich die Bohrung oder Öffnung (60) im Wesentlichen senkrecht zur Drehachse erstreckt.

9. Sicherheitskupplung gemäß mindestens einem der Ansprüche 1 bis 8, **dadurch gekennzeichnet, dass**, insbesondere nach Einbringen der Wälzkörper (52), die Bohrung oder Öffnung (60) mittels mindestens eines Verschlussmittels (62), insbesondere mittels mindestens eines Pfropfens oder mittels mindestens eines Stopfens, verschließbar ist.

10. Verwendung mindestens einer Sicherheitskupplung (100; 100'; 100") gemäß mindestens einem der Ansprüche 1 bis 9 bei einer Windkraftanlage, insbesondere bei einem Windrad, zum Beispiel in deren/dessen mechanischem Antrieb, wie etwa beim mechanischen Wiedereinrasten.

## Claims

1. Safety coupling (100; 100'; 100") which disengages from a drive position into a freewheeling state when an adjustable overload torque is exceeded during overload,
- with a driving flange (10) which can be rotated about an axis of rotation and which comprises recesses, in particular engagement segments or calottes, distributed, in particular evenly, on the circumference (12) of a bolt circle, and
- with a driven coupling part (20) which can be rotated about the same axis of rotation,
wherein the coupling part (20) comprises switching segments (40), in particular retaining devices or detent devices, which, in the drive position, press detent elements (30), in particular detent balls, into the recesses under spring force and effect a connection between the flange (10) and the coupling part (20) for conjoint rotation and which, when the overload torque is exceeded, effect the release of the connection for conjoint rotation, with disengagement into the freewheeling state, wherein a switching segment (40) is assigned to each detent element (30) and the detent element (30) moves out of the recess into the freewheeling state from the drive position against the spring force,
- wherein the flange (10) is in the form of an inner ring associated with a bearing or bearing system (50), and
- wherein the coupling part (20) is in the form of an outer ring associated, in particular concentrically, with the inner ring,
**characterized in**
- **that** rolling elements (52) are arranged between the inner ring and the outer ring, in particular between the outer lateral surface of the inner ring and the inner lateral surface of the outer ring, and
- **that** the inner ring and/or the outer ring comprise/s at least one bore or opening (60) through which the rolling elements (52) can be inserted between the inner ring and the outer ring.

2. Safety coupling according to claim 1, **characterized in that** the bolt circle is arranged on a flat end face or a shell of the flange (10).

3. Safety coupling according to claim 1 or 2, **characterized in that** the switching segment (40) is in the form of a spring-loaded detent ball and/or of a tappet distributed on the circumference, which can be pressed into the recess arranged on the flange (10) by means of the spring force in a form-fitting manner.

4. Safety coupling according to at least one of claims 1 to 3, **characterized in that** the spring force is providable by at least one disc spring.

5. Safety coupling according to at least one of claims 1 to 4, **characterized in that** the switching segment (40) is housed in a casing.

6. Safety coupling according to at least one of claims 1 to 5, **characterized in that** the switching segment (40) is arranged essentially perpendicular to the axis of rotation, in particular pointing radially outwards.

7. Safety coupling according to at least one of claims 1 to 6, **characterized in that** the rolling elements (52) are in the form of balls, cylinders and/or cones.

8. Safety coupling according to at least one of claims 1 to 7, **characterized in that** the bore or opening (60) extends essentially perpendicular to the axis of rotation.

9. Safety coupling according to at least one of claims 1 to 8, **characterized in that,** in particular after inserting the rolling elements (52), the bore or opening (60) is closable by means of at least one closure means (62), in particular by means of at least one plug or by means of at least one stopper.

10. Use of at least one safety coupling (100; 100'; 100") according to at least one of claims 1 to 9 in a wind turbine, in particular in a wind wheel, for example in its mechanical drive, such as when mechanically reengaging.

## Revendications

1. Un accouplement de sécurité (100 ; 100' ; 100"), qui se dégage d'une position d'entraînement dans un état de roue libre lorsqu'un couple de surcharge réglable est dépassé lors d'une surcharge,
- avec une bride d'entraînement (10), qui peut tourner autour d'un axe de rotation et qui comporte des évidements, en particulier des segments de mise en prise ou des calottes, répartis, en particulier uniformément, sur la circonférence (12) d'un cercle à trous, et
- avec une pièce d'accouplement entraînée (20), qui peut tourner autour du même axe de rotation,
la pièce d'accouplement (20) comportant, dans la position d'entraînement, des segments de commutation (40), en particulier des dispositifs de retenue ou des dispositifs de verrouillage, qui compriment des éléments de verrouillage (30), en particulier des billes de verrouillage, dans les évidements sous l'effet d'une force de ressort et entraînent une liaison entre la bride (10) et la pièce d'accouplement (20) pour une rotation conjointe et qui, lorsque le couple de surcharge est dépassé, entraînent la libération de la liaison pour une rotation conjointe, avec dégagement dans l'état de roue libre, et un segment de commutation (40) étant associé à chaque élément de verrouillage (30), et l'élément de verrouillage (30) se déplaçant de la position d'entraînement contre la force de ressort, hors de l'évidement, dans l'état de roue libre,
- la bride (10) se présentant sous forme d'une bague intérieure associée à un palier ou à un système de palier (50) et
- la pièce d'accouplement (20) se présentant sous forme d'une bague extérieure associée, en particulier de manière concentrique, à la bague intérieure,
**caractérisé en ce**
- **que** des éléments de roulement (52) sont disposés entre la bague intérieure et la bague extérieure, en particulier entre la surface enveloppe extérieure de la bague intérieure et la surface enveloppe intérieure de la bague extérieure, et
- **que** la bague intérieure et/ou la bague extérieure comporte/nt au moins un alésage ou une ouverture (60) à travers lequel/laquelle les éléments de roulement (52) peuvent être introduits entre la bague intérieure et la bague extérieure.

2. L'accouplement de sécurité selon la revendication 1, **caractérisé en ce que** le cercle à trous est disposé sur une face frontale plane ou une enveloppe de la bride (10).

3. L'accouplement de sécurité selon la revendication 1 ou 2, **caractérisé en ce que** le segment de commutation (40) se présente sous forme d'une bille de verrouillage à ressort et/ou d'un poussoir disposé de manière répartie sur la circonférence, qui peut être enfoncé par complémentarité de forme dans l'évidement disposé sur la bride (10) au moyen de la force de ressort.

4. L'accouplement de sécurité selon au moins l'une des revendications 1 à 3, **caractérisé en ce que** la force de ressort peut être fournie par au moins un ressort à disque.

5. L'accouplement de sécurité selon au moins l'une des revendications 1 à 4, **caractérisé en ce que** le segment de commutation (40) est logé dans un boîtier.

6. L'accouplement de sécurité selon au moins l'une des revendications 1 à 5, **caractérisé en ce que** le segment de commutation (40) est disposé essentiellement perpendiculairement à l'axe de rotation, en particulier radialement vers l'extérieur.

7. L'accouplement de sécurité selon au moins l'une des revendications 1 à 6, **caractérisé en ce que** les éléments de roulement (52) se présentent sous forme de billes, de cylindres et/ou de cônes.

8. L'accouplement de sécurité selon au moins l'une des revendications 1 à 7, **caractérisé en ce que** l'alésage ou l'ouverture (60) s'étend essentiellement perpendiculairement à l'axe de rotation.

9. L'accouplement de sécurité selon au moins l'une des revendications 1 à 8, **caractérisé en ce que,** en particulier après introduire les éléments de roulement (52), l'alésage ou l'ouverture (60) peut être fermé au moyen d'au moins un moyen de fermeture (62), en particulier au moyen d'au moins un bouchon ou au moyen d'au moins un tampon.

10. Utilisation d'au moins un accouplement de sécurité (100 ; 100' ; 100") selon au moins l'une des revendications 1 à 9 dans une éolienne, en particulier dans une turbine éolienne, par exemple dans son entraînement mécanique, comme lors du réenclenchement mécanique.
